# EUROPEAN PATENT APPLICATION

(11) **EP 4 579 868 A1**
(43) Date of publication of application: **02.07.2025**
(21) Application number: 23886179.3
(22) Date of filing: 30.10.2023
(51) Int. Cl.: H01M 10/42, H01M 10/44, H01M 50/204

(54) **BATTERY PACK AND DEVICE COMPRISING SAME**

(30) Priority: 02.11.2022 KR 20220144751
(71) Applicant: LG Energy Solution, Ltd., Seoul 07335 (KR)
(72) Inventor: JUNG, Hyeran, Daejeon 34122 (KR); KIM, Sehoon, Daejeon 34122 (KR); LEE, Su Rim, Daejeon 34122 (KR); LEE, Kyungmin, Daejeon 34122 (KR)
(74) Representative: Plasseraud IP
(86) International application number: PCT/KR2023/017018
(87) International publication number: WO 2024/096483

(57) **Abstract**

A battery pack according to an embodiment of the present disclosure includes one or more first battery modules comprising a plurality of battery cells, and one or more second battery modules respectively disposed adjacent to the first battery modules and comprising a plurality of battery cells, wherein the first battery modules and the second battery modules are different from each other in a maximum state of charge (SOC).

## Description

### CROSS-REFERENCE TO RELATED APPLICATION

This application claims priority to and the benefit of Korean Patent Application No. 10-2022-0144751 filed in the Korean Intellectual Property Office on November 02, 2022, the entire contents of which are incorporated herein by reference.

### [Technical Field]

The present disclosure relates to a battery pack and a device including the same, and more particularly, to a battery pack with improved safety and a device including the same.

### [Background Art]

In modern society, as the use of portable devices such as mobile phones, laptops, camcorders, digital cameras, etc. has become commonplace, the development of technologies in the field related to the above mobile devices has become more active. In addition, rechargeable secondary batteries are used as power sources of electric vehicles (EVs), hybrid electric vehicles (HEVs), plug-in hybrid electric vehicles (P-HEVs), etc. to solve air pollution such as the existing gasoline vehicles using fossil fuels, and thus, the need for development of secondary batteries is increasing.

Currently commercialized secondary batteries include nickel cadmium batteries, nickel hydrogen batteries, nickel zinc batteries, lithium secondary batteries, etc. Among these, lithium secondary batteries rarely have a memory effect compared to nickel-based secondary batteries, and thus, lithium secondary batteries have been spotlighted owing to the advantages of free charging and discharging, very low self-discharge rate, and high energy density.

These lithium secondary batteries mainly use lithium-based oxide and carbon material as positive active materials and negative electrode active materials, respectively. A lithium secondary battery includes an electrode assembly in which a positive electrode plate and a negative electrode plate respectively coated with a positive active material and a negative electrode active material are disposed with a separator therebetween, and an exterior material, that is, a battery case, that seals and accommodates the electrode assembly together with an electrolyte.

Generally, lithium secondary batteries may be classified into can-type secondary batteries in which an electrode assembly is built into a metal can and pouch-type secondary batteries in which an electrode assembly is built into a pouch of an aluminum laminate sheet, according to the shape of an exterior material.

In the case of secondary batteries used in small devices, 2 or 3 battery cells are disposed, but in the case of secondary batteries used in medium to large devices such as automobiles, battery modules in which a number of battery cells are electrically connected are used. These battery modules have improved capacity and output by connecting the number of battery cells in series or parallel and forming a cell assembly. In addition, one or more battery modules may be mounted with various control and protection systems such as a battery management system (BMS) and a cooling system to form a battery pack.

When a battery pack is configured by connecting a plurality of battery cells in series/parallel, it is generally a method of configuring the battery pack by first configuring a battery module including at least one battery cell, and adding other components using at least one battery module. The number of battery modules included in the battery pack, or the number of battery cells included in the battery module may be set in various ways according to the required output voltage or charge/discharge capacity.

In particular, recently, owing to the development of high-capacity cells, the safety of secondary batteries, especially thermal propagation characteristics, has been recognized as important. As the capacity of cells increases, thermal propagation safety decreases, and thus, it is necessary to improve the thermal propagation safety.

### [Disclosure]

### [Technical Problem]

The present disclosure attempts to provide a battery pack with enhanced safety while using existing high-capacity cells and a device including the same.

However, the problems to be solved by the embodiments of the present disclosure are not limited to the above-mentioned problems and may be expanded in various ways within the scope of the technical idea included in the present disclosure.

### [Technical Solution]

A battery pack according to an embodiment of the present disclosure includes one or more first battery modules comprising a plurality of battery cells, and one or more second battery modules respectively disposed adjacent to the first battery modules and comprising a plurality of battery cells, wherein the first battery modules and the second battery modules are different from each other in a maximum state of charge (SOC).

The maximum SOC of the one or more first battery modules may be 100 %, and maximum SOC of the one or more second battery modules may be 90 %.

The battery pack may further include a control unit connected to each of the one or more first battery modules and the one or more second battery modules to perform charging and SOC control.

When the charging is performed, the control unit may control the SOC of the one or more first battery modules to be 100 %, and the SOC of the one or more second battery modules to be 90 %.

Any one of the one or more first battery modules may be disposed to be surrounded by the one or more second battery modules.

Any one of the one or more second battery modules may be disposed to be surrounded by the one or more first battery modules.

The one or more first battery modules and the one or more second battery modules are alternately disposed.

The battery cells included in the first battery modules and the battery cells included in the second battery modules may have the same type.

The battery pack may further include a pack frame packaging the one or more first battery modules and the one or more second battery modules.

A device according to another embodiment of the present disclosure may include the at least one battery pack.

### [Advantageous Effects]

According to embodiments of the present disclosure, the battery pack with enhanced safety while using existing high-capacity cells and the device including the same may be provided.

The effects of the present disclosure are not limited to the above-mentioned effects, and other effects not mentioned will be clearly understood by those skilled in the art from the description of the claims.

### [Description of the Drawings]

FIG. 1 is an exploded perspective view of a battery module included in a battery pack according to an embodiment of the present disclosure.
FIG. 2 is a diagram showing a battery pack according to an embodiment of the present disclosure.
FIG. 3 is a diagram schematically showing the battery pack of FIG. 2, including a control unit and a charging unit.

### [Mode for Invention]

The present disclosure will be described more fully hereinafter with reference to the accompanying drawings, so that those skilled in the art to which the present disclosure pertains may easily implement the embodiments of the present disclosure. However, the present disclosure may be implemented in many different forms and is not limited to the embodiments described herein.

In order to clearly describe the present disclosure, parts irrelevant to the description are omitted, and the same reference numerals are denoted by the same or similar components throughout the specification.

In addition, since the size and thickness of each component shown in the drawings are arbitrarily shown for convenience of explanation, the present disclosure is not necessarily limited to those as shown. In the drawings, the thickness is shown enlarged to clearly express the various layers and regions. Also, in the drawings, for convenience of explanation, the thicknesses of some layers and regions are exaggerated.

In addition, it will be understood that when an element such as a layer, film, region, or substrate is referred to as being "on" another element, it may be directly on the other element or intervening elements may also be present. In contrast, when an element is referred to as being "directly on" another element, there are no intervening elements present. In addition, being "above" or "on" a reference part means being above or below the reference part, and does not necessarily mean being "above" or "on" in the opposite direction of gravity.

In addition, throughout the specification, when a portion "includes" a certain component, it means that the portion may further include other components without excluding other components unless otherwise stated.

In addition, throughout the specification, when it is referred to as "on a plane", it means when the target portion is viewed from above, and when it is referred to as "on a cross-section", it means when a cross section of the target portion cut vertically is viewed from the side.

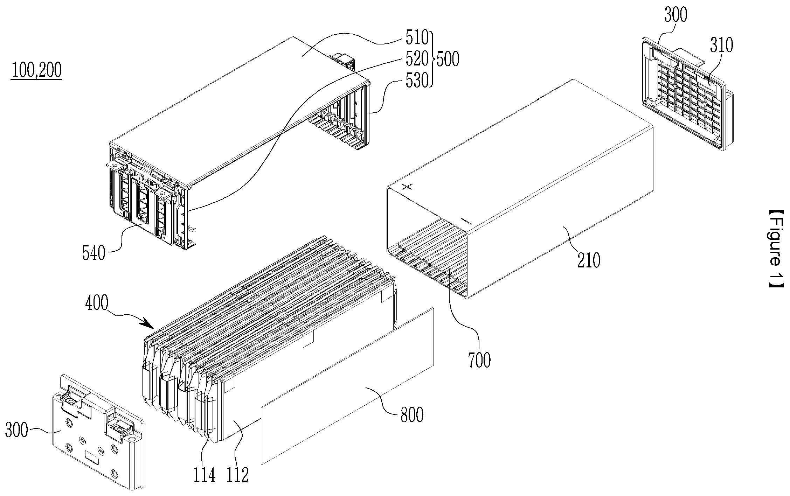

Hereinafter, a battery pack of the present disclosure is described with reference to FIGS. 1 to 3.

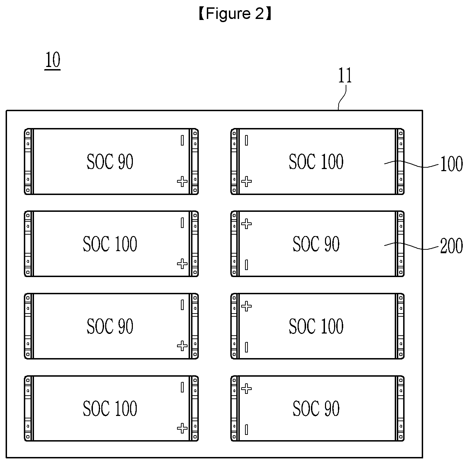

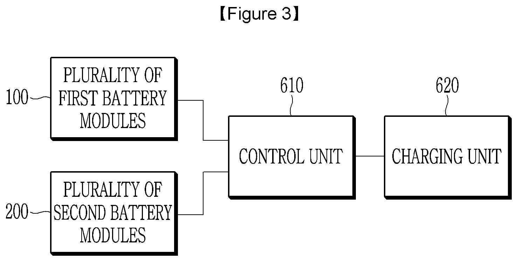

FIG. 1 is an exploded perspective view of a battery module included in a battery pack according to an embodiment of the present disclosure. FIG. 2 is a diagram showing a battery pack according to an embodiment of the present disclosure. FIG. 3 is a diagram schematically showing the battery pack of FIG. 2, including a control unit and a charging unit.

Referring to FIG. 1, each of first and second battery modules 100 and 200 included in the battery pack according to an embodiment of the present disclosure includes a battery cell assembly 400 including one or more battery cells, a module frame 210 that accommodates the battery cell assembly 400, and an end plate 300 that is located at both ends of the battery cell assembly 400 in a longitudinal direction and is coupled to an opening of the module frame 210.

The battery cell assembly 400 is an assembly of secondary batteries including a plurality of battery cells 112. The battery cell assembly 400 may include the plurality of battery cells 112, and each battery cell includes an electrode lead 114. The battery cell 112 may be a pouch-type battery cell having a plate shape, but is not limited thereto. The electrode lead 114 is a positive electrode lead or a negative electrode lead, and an end of the electrode lead 114 of each battery cell 112 may be bent in one direction, and accordingly, may be in contact with an end of the electrode lead 114 of the other adjacent battery cell 112. The two electrode leads 114 in contact with each other may be fixed to each other through welding, etc., and through this, an electrical connection may be made between the battery cells 112 inside the battery cell assembly 400.

In addition, a bus bar frame 500 accommodated in the module frame 210 may be provided along with the battery cell assembly 400. The bus bar frame 500 may include an upper frame 510 located at the top of the cell assembly 400, a front frame 520 located at the front of the battery cell assembly 400, and a rear frame 530 located at the rear of the battery cell assembly 400, and a bus bar 540 connected to the electrode leads 114 of the battery cells 112 constituting the battery cell assembly 400 may be mounted on the front frame 520 and the rear frame 530.

The plurality of battery cells 112 are vertically stacked so that the electrode leads 114 are aligned in one direction to form the battery cell assembly 400. The battery cell assembly 400 is accommodated in the module frame 210 having at least one opening open in the longitudinal direction of the battery cell assembly 400. At this time, the electrode leads 114 may be drawn to the outside of the module frame 210 through the opening, and the drawn electrode leads 114 may be respectively coupled to the front frame 520 and the rear frame 530 of the bus bar frame 500 and electrically connected to the bus bar 540 mounted here. Here, the bus bar frame 500 may be made of an insulating material, for example, a non-conductive synthetic resin, and the bus bar 540 may be made of a conductive metal material.

Each of the first and second battery modules 100 and 200 may include a flexible printed circuit board (FPCB) (not shown) extending and mounted on the top of the battery cell assembly 400 in the longitudinal direction of the module frame 210 and configured to sense the battery cell 112. In addition, the first and second battery modules 100 and 200 may include various electrical components, for example, an internal circuit board (ICB) and a battery management system (BMS). The electrical components such as the ICB and the BMS may be electrically connected to the plurality of battery cells 112.

Each of the first and second battery modules 100 and 200 may further include a thermally conductive resin layer 700 located between a lower surface of the battery cell assembly 400 and the module frame 210. The thermally conductive resin layer 700 is formed by injecting a thermally conductive resin, and may serve to transfer heat generated from the battery cell assembly 400 to the bottom of the first and second battery modules 100 and 200 and to fix the battery cell assembly 400 within the first and second battery modules 100 and 200.

Meanwhile, a heat sink 800 may be provided on a side surface of the battery cell assembly 400 and accommodated together in the module frame 210, but is not particularly limited.

The configurations of the first and second battery modules 100 and 200 have been described above, but the shapes or configurations thereof are not limited thereto, and may be different in some cases.

Next, a battery pack 10 according to an embodiment of the present disclosure will be described with reference to FIGS. 2 and 3.

The battery pack 10 includes one or more first battery modules 100, one or more second battery modules 200, and a pack frame 11 that accommodates the one or more first battery modules 100 and the one or more second battery modules 200.

The first and second battery modules 100 and 200 are different from each other in the maximum state of charge (SOC). Here, the SOC is a ratio of the remaining capacity to the maximum capacity, and is usually expressed in the range of 0 to 100 %. The remaining capacity represents the amount of charge currently stored in the battery pack 10. In the present embodiment, the first and second battery modules 100 and 200 differently control the maximum SOC in controlling the SOC. Preferably, the maximum SOC of the first battery module 100 is 100 %, and the maximum SOC of the second battery module 200 is 90 %.

The first and second battery modules 100 and 200 which are different in the maximum SOC may be arranged alternately as shown in FIG. 2. That is, the second battery modules 200 may be arranged in all directions with respect to one first battery module 100, and the first battery modules 100 may be arranged in all directions with respect to one second battery module 200.

In the case of the battery pack 10 including the first and second battery modules 100 and 200 arranged as above, the second battery module 200 exhibits a lower explosion pressure when a battery cell ignites, thereby improving thermal propagation safety. That is, in the case of the second battery module 200 with the SOC of 90 %, the explosion pressure (pressure applied when the battery cell ignites) is about 40 % lower than that of the first battery module 100 with the SOC of 100 %. Therefore, when the ignition time and the explosion pressure are measured by applying heat to the second battery module 200 and the first battery module 100 which are arranged alternately at the time of the ignition, the ignition time increases and the explosion pressure decreases compared to the case where only the modules with the SOC of 100 % are disposed and ignited all at once. In addition, even if ignition occurs in the first battery module 100, because the SOC of the adjacent second battery module 200 is low, the explosion pressure may be low, and when ignition occurs in the second battery module 200, because the explosion pressure itself is low, the influence on the adjacent first battery module 100 may be reduced.

On the other hand, when the maximum SOC of the second battery module 200 is 90 % or higher, it is difficult to obtain the effect of reducing the explosion pressure described above, and when the maximum SOC is less than 90 %, it is impossible to achieve the required high output of the device, and thus, the maximum SOC may be controlled to 90 %.

In addition, in the case of the first and second battery modules 100 and 200, the above-described effect may be obtained by changing only the SOC in the configuration of battery modules including the same type of battery cells 112 in order to adjust the output, without changing the type or structure of the battery cell 112 included in each battery module.

To control the SOC, the battery pack 10 of the present embodiment may include a control unit 610 connected to the plurality of first battery modules 100 and the plurality of second battery modules 200. The control unit 610 may also be connected to a charging unit 620 to control the charging unit 620 to limit the maximum SOC of the first and second battery modules 100 and 200 to 100 % and 90 %, respectively, while monitoring the SOC at the time of charging the first and second battery modules 100 and 200. Such monitoring and control may be implemented by estimating and controlling the SOC from one or a combination of two or more of various known techniques.

As described above, according to the battery pack 10 according to an embodiment of the present disclosure, a plurality of battery modules which are different in the maximum SOC are alternately arranged with each other, thereby improving thermal propagation characteristics (i.e., extending the ignition time and reducing the explosion pressure) when battery cells included in the battery modules ignite.

The battery pack described above may be applied to various devices. These devices may be applied to transportation means such as electric bicycles, electric cars, hybrid cars, etc., but the present disclosure is not limited thereto and may be applicable to various devices that may use the battery module and the battery pack including the battery module, which also falls within the scope of the present disclosure.

Although the embodiments of the present disclosure have been described in detail above, the scope of the present disclosure is not limited thereto, and various modifications and improvements made by those of ordinary skill in the field to which the present disclosure pertains also belong to the scope of the present disclosure.

### [Description of Reference Numerals]

100: first battery module
200: second battery module
10: battery pack
11: pack frame
112: battery cell
610: control unit
620: charging unit

## Claims

1. A battery pack comprising:
one or more first battery modules including a plurality of battery cells; and
one or more second battery modules respectively disposed adjacent to the first battery modules and including a plurality of battery cells,
wherein the first battery modules and the second battery modules are different from each other in a maximum state of charge (SOC).

2. The battery pack of claim 1, wherein:
the maximum SOC of the one or more first battery modules is 100 %, and the maximum SOC of the one or more second battery modules is 90 %.

3. The battery pack of claim 1, further comprising:
a control unit connected to each of the one or more first battery modules and the one or more second battery modules to perform charging and SOC control.

4. The battery pack of claim 3, wherein:
when the charging is performed, the control unit is configured to control the SOC of the one or more first battery modules to be 100 %, and the SOC of the one or more second battery modules to be 90 %.

5. The battery pack of claim 1, wherein:
any one of the one or more first battery modules is disposed to be surrounded by the second battery modules.

6. The battery pack of claim 1, wherein:
any one of the one or more second battery modules is disposed to be surrounded by the first battery modules.

7. The battery pack of claim 1, wherein:
the one or more first battery modules and the one or more second battery modules are alternately disposed.

8. The battery pack of claim 1, wherein:
the battery cells included in the first battery modules and the battery cells included in the second battery modules have the same type.

9. The battery pack of claim 1, further comprising:
a pack frame packaging the one or more first battery modules and the one or more second battery modules.

10. A device comprising at least one battery pack of claim 1.
